# EUROPÄISCHE PATENTANMELDUNG

(11) **EP 2 442 383 A1**
(43) Veröffentlichungstag der Anmeldung: **18.04.2012**
(21) Anmeldenummer: 11184775.2
(22) Anmeldetag: 12.10.2011
(51) Int. Cl.: H01M 2/10, H01M 10/50

(54) **Modulares System für einen Akkumulator**

(30) Priorität: 13.10.2010 US 392731 P; 28.01.2011 DE 102011009751
(71) Anmelder: Magna E-Car Systems GmbH & Co OG, 8041 Graz (AT)
(72) Erfinder: Wünsche, Ralph, 8010 Graz (AT)
(74) Vertreter: Hano, Christian

(57) **Zusammenfassung**

Es wird ein Akkumulator (1a..1c) mit im Wesentlichen quaderförmiger Form angegeben, umfassend zumindest eine spannungserzeugende Zelle (2) und zumindest zwei separate Gehäuseelemente (4a, 4b, 6a, 6b, 8a, 8b), welche jeweils maximal drei Seitenteile und gemeinsam zumindest vier Seitenteile umfassen, wobei ein Seitenteil zur Begrenzung je einer Seite des quaderförmigen Akkumulators (1a..1c) vorgesehen ist. Zumindest zwei der Gehäuseelemente (4a, 4b, 6a, 6b, 8a, 8b) sind dabei über Schnapphaken (10) miteinander verbunden.

## Beschreibung

### TECHNISCHES GEBIET

Die Erfindung betrifft einen Akkumulator mit im Wesentlichen quaderförmiger Form, umfassend zumindest eine spannungserzeugende Zelle und zumindest zwei separate Gehäuseelemente. Die Gehäuseelemente umfassen jeweils maximal drei Seitenteile und gemeinsam zumindest vier Seitenteile, wobei ein Seitenteil zur Begrenzung je einer Seite des quaderförmigen Akkumulators vorgesehen ist.

### STAND DER TECHNIK

Verfahren zum Herstellen von Akkumulatoren, bei denen Zellen in ein Akkumulatorgehäuse eingebaut werden, sind aus dem Stand der Technik bereits bekannt.

Beispielsweise offenbart die DE 602 07 158 T2 einen Akkumulator, bei dem die Zellen in ein schalen- beziehungsweise kistenförmiges Gehäuseelement eingebaut werden. Dieses schalenbeziehungsweise kistenförmige Gehäuseelement wird durch einen Deckel verschlossen, welcher Stopfen aufweist, die in Löcher des Gehäuseelements eingreifen. Weiterhin werden verschiedene Anordnungen von Zellen vorgeschlagen. Allerdings ist dann ein anderes Gehäuse notwendig.

Die DE 100 27 385 A1 offenbart weiterhin eine Struktur zur Verhinderung eines Fehlers beim Zusammenbau eines Akkumulators bestehend aus einer ersten Einheit, einer zweiten Einheit sowie eine Vielzahl von Befestigungsvorrichtungen, die in gleichen Abständen angeordnet sind und mit denen die ersten und zweiten Einheiten zusammengebaut werden. Weiterhin umfasst die Struktur zwei Typen von Positionierrahmen, einem großen und einem kleinen, die in wechselnder Weise auf einer der ersten und zweiten Einheiten vorgesehen sind, und eine Vorsprungvorrichtung, die auf der anderen der ersten und zweiten Einheiten vorgesehen ist. Eine Unstimmigkeit im Abstand wird beim Zusammenbau einer Batterieverbindungsplatte mit einer Batteriekonstruktion verhindert.

Die DE 31 03 534 A1 offenbart schließlich ein als einstückiges Spritzteil hergestelltes Batteriegehäuse zur Aufnahme säulenförmig stapelbarer galvanischer Elemente. Das Batteriegehäuse wird dabei von zwei zusammenklappbaren und über ein flexibles Filmscharnier miteinander verbundenen Halbschalen gebildet. Eine über die Außenwand einer Halbschale geführte Kontaktfeder ermöglicht die Reihenschaltung zweier parallel angeordneter Säulen, während weitere Kontaktelemente die erste und die letzte Zelle in der Gesamtbestückung mit dem Plus- bzw. Minuspol an den Stirnseiten des Batteriegehäuses verbinden. Die Halbschalen werden beim Zusammenklappen mittels eines selbsthemmenden Schnappverschlusses geschlossen.

Nachteilig an den bekannten Lösungen ist, dass die Montage von Akkumulatoren nach dem Stand der Technik relativ aufwändig ist. Zudem bestehen sie aus einer Vielzahl spezieller Bauteile, die untereinander nicht austauschbar sind. Die Herstellung verschiedenartiger Akkumulatoren wird dadurch erschwert.

### OFFENBARUNG DER ERFINDUNG

Die Aufgabe der vorliegenden Erfindung ist es daher, einen verbesserten Akkumulator sowie ein verbessertes Herstellungsverfahren für einen Akkumulator anzugeben. Insbesondere soll die Montage des Akkumulators vereinfacht werden.

Die Aufgabe der Erfindung wird durch einen Akkumulator der eingangs genannten Art gelöst, bei dem die zumindest zwei Gehäuseelemente über Schnapphaken miteinander verbunden sind.

Durch die Erfindung werden die Nachteile des eingangs genannten Standes der Technik überwunden, denn durch die Verwendung von Schnapphaken (auch unter dem Begriff "Rasthaken" bekannt) kann der Akkumulator besonders einfach aufgebaut werden, insbesondere auch werkzeuglos. Dadurch, dass das Akkumulatorgehäuse mehrere Gehäuseelemente aufweist, ist es auch relativ einfach, ein modulares System für einen Akkumulator zu realisieren. Dabei können einzelne Gehäuseelemente durch Alternativ-Gehäuseelemente ersetzt werden, die eine andere Funktion erfüllen. Beispielsweise kann ein Bodenelement des Akkumulators aus Vollmaterial hergestellt werden, wohingegen ein Alternativ-Bodenelement einen Kanal zum Anschluss an ein Kühlsystem umfasst, um solcherart den Akkumulator mittels eines Fluids zu temperieren. Durch das modulare System ist es möglich, eine Vielzahl verschiedenartiger Akkumulatoren mit einer vergleichsweise geringen Anzahl an Bauteilen herzustellen. Sowohl die Lagerhaltung der Bauteile als auch die Montage an sich wird dadurch vereinfacht. Insbesondere sind die Gehäuseelemente aus Kunststoff hergestellt, wodurch eine Vielzahl von verschiedenen Akkumulatoren mit vergleichsweise geringem technischen Aufwand hergestellt werden können.

Vorteilhafte Ausgestaltungen und Weiterbildungen der Erfindung ergeben sich nun aus den Unteransprüchen sowie aus der Beschreibung in Zusammenschau mit den Figuren.

Vorteilhaft ist es, wenn ein Gehäuseelement einen Kanal umfasst, welcher für die Durchströmung durch ein Fluid vorbereitet ist. Auf diese Weise kann ein Akkumulator aufgebaut werden, dessen Gehäuse einen Kanal umfasst, welcher an einen Klimakreislauf angeschlossen werden kann und solcherart durch ein Fluid durchströmt wird, welches den Akkumulator je nach Anforderung erwärmen oder kühlen kann.

Vorteilhaft ist es weiterhin, wenn ein Gehäuseelement eine Zellverbindungseinheit zur elektrischen Verbindung von zumindest zwei spannungserzeugenden Zellen umfasst. Beispielsweise kann eine Serienschaltung der Zellen, eine Parallelschaltung oder eine kombinierte Serien- und Parallelschaltung der Zellen gebildet werden. Dadurch können auf sehr einfache Weise Akkumulatoren mit unterschiedlicher Spannung und unterschiedlicher Kapazität hergestellt werden.

Vorteilhaft ist es auch, wenn ein Gehäuseelement eine Zellüberwachungseinheit zur Überwachung von zumindest zwei spannungserzeugenden Zellen umfasst. Auf diese Weise können beispielsweise die Spannungen der Zellen ermittelt werden.

Vorteilhaft ist es zudem, wenn ein Gehäuseelement Montagemittel zur Befestigung eines Seitenelements auf einer Basisfläche umfasst. Mit Hilfe der genannten Montagemittel kann der Akkumulator auf einer Basisfläche befestigt werden, beispielsweise auf einer Fläche in einem Kraftfahrzeug, welche für den Einbau des erfindungsgemäßen Akkumulators vorbereitet ist.

Günstig ist es, wenn ein Gehäuseelement aus genau einem Seitenteil gebildet ist. Auf diese Weise können die Gehäuseelemente besonders flexibel eingesetzt werden, beziehungsweise wird dadurch die Anzahl der Elemente eines modularen Systems reduziert. In einer besonders vorteilhaften Variante sind alle Gehäuseelemente beziehungsweise Seitenteile identisch aufgebaut.

Günstig ist es aber auch wenn ein Gehäuseelement aus wenigstens zwei über ein Scharnier verbundenen Seitenteilen oder aus wenigstens zwei winkelig und miteinander fix verbundenen Seitenteilen gebildet ist. Auf diese Weise kann der Montagevorgang vereinfacht werden, das heißt die Anzahl der Montageschritte reduziert werden, da für die Herstellung eines Akkumulators nur vergleichsweise wenige Bauteile zusammenzufügen sind.

Vorteilhaft ist es, wenn die Gehäuseelemente dazu vorbereitet sind, den Akkumulator an genau vier Seiten zu begrenzen. Durch die offene Bauweise wird der Akkumulator einerseits besonders leicht, andererseits werden für die Herstellung eines Akkumulators nur vergleichsweise wenige Bauteile benötigt.

Günstig ist es, wenn zumindest zwei Gehäuseelemente identisch sind. Auf diese Weise kann die Anzahl der Bauteile in einem modularen System noch weiter reduziert und die Montage des Akkumulators weiter vereinfacht werden. Beispielsweise können Gehäuseelemente, welche den Akkumulator seitlich begrenzen, identisch aufgebaut sein.

Besonders günstig ist es, wenn ein Gehäuseelement punktsymmetrisch ist. Dadurch kann das betreffende Gehäuseelement in zwei verschiedenen, nämlich um 180° gedrehten, Lagen eingebaut werden. Die Montage eines Akkumulators kann daher noch weiter vereinfacht werden.

Günstig ist es, wenn zumindest zwei der Bauteile des erfindungsgemäßen Akkumulators miteinander verklebt sind. Beispielsweise können mehrere spannungserzeugende Zellen und/oder mehrere Gehäuseelemente miteinander verklebt sein. Dadurch wird der Akkumulator in sich sehr stabil und kann höhere Belastungen aushalten. Bei Verwendung eines wärmeleitfähigen Klebers kann auch die Wärmeleitung zwischen den Zellen oder zwischen dem Gehäuse und den Zellen verbessert werden.

Besonders vorteilhaft ist in diesem Zusammenhang ein Verfahren zur Herstellung eines Akkumulators, umfassend die Schritte:
a) Applizieren von Klebstoff auf wenigstens einem der Bauteile des Akkumulators,
b) Montage der genannten Bauteile,
c) Fixierung der Bauteile durch Betätigung der auf den Gehäuseelementen angeordneten Schnapphaken und
d) Freistehende Lagerung des Akkumulators bis zur Aushärtung des Klebstoffs.

Auf diese Weise kann der Akkumulator einerseits werkzeuglos hergestellt werden,
andererseits wird durch die Verklebung eine dauerhafte Verbindung der betreffenden Teile erzielt. Der Begriff "Freistehende Lagerung" bedeutet im Rahmen der Erfindung dass die Aushärtung des Klebstoffs im Schritt d) des erfindungsgemäßen Verfahrens ohne Spannvorrichtung erfolgt. Für die Aushärtung des Klebstoffs ist eine Spannvorrichtung zum Aneinanderpressen der zu verklebenden Teile also nicht notwendig. Beispielsweise kann der Akkumulator daher auch direkt nach der Montage verpackt beziehungsweise auch ausgeliefert werden, da der Kleber in der Verpackung beziehungsweise auf dem Transportweg aushärten kann. Selbstverständlich können aber auch noch weitere Produktionsschritte durchgeführt werden, bevor der Akkumulator in einem Zwischenlager vor der Auslieferung endgültig aushärtet. Die Herstellung eines Akkumulators entsprechend dem genannten Verfahren ist jedenfalls besonders einfach und schnell.

Die obigen Ausgestaltungen und Weiterbildungen der Erfindung lassen sich auf beliebige Art und Weise kombinieren.

### KURZE BESCHREIBUNG DER FIGUREN

Die vorliegende Erfindung wird nachfolgend anhand der in den schematischen Figuren der Zeichnung angegebenen Ausführungsbeispiele näher erläutert. Es zeigen dabei:
- Figur 1: eine erste Ausführungsform eines erfindungsgemäßen Akkumulators;
- Figur 2: die Schritte bei der Herstellung des in Fig. 1 dargestellten Akkumulators;
- Figur 3: einen Querschnitt durch den in Fig. 1 dargestellten Akkumulator;
- Figur 4: eine Detailansicht eines Deckelelements des Akkumulators aus Fig. 1;

- Figur 5: den Akkumulator aus Fig. 1 schräg von unten gesehen;
- Figur 6: eine zweite Ausführungsform eines erfindungsgemäßen Akkumulators, welcher für die Temperierung durch ein Fluid vorbereitet ist, und
- Figur 7: eine weitere Ausführungsform eines erfindungsgemäßen Akkumulators, bei welchem auf dem Deckelelement eine Zellüberwachungseinheit montiert ist.

### DETAILIERTE BESCHREIBUNG DER ERFINDUNG

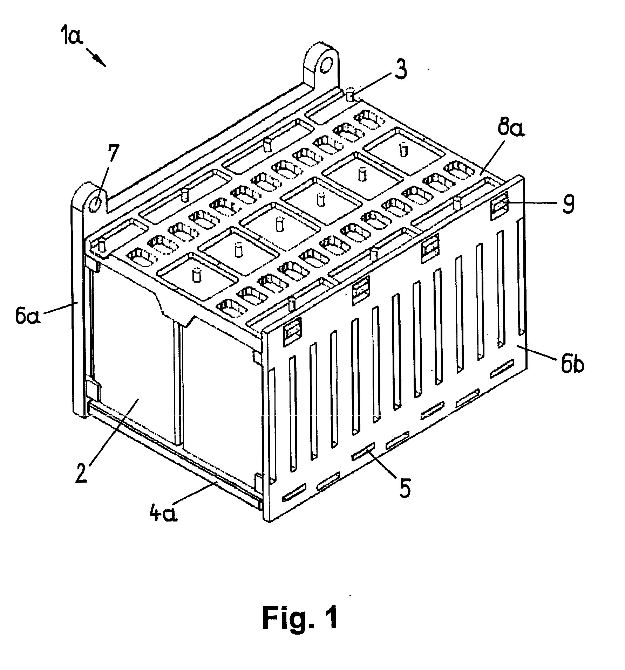

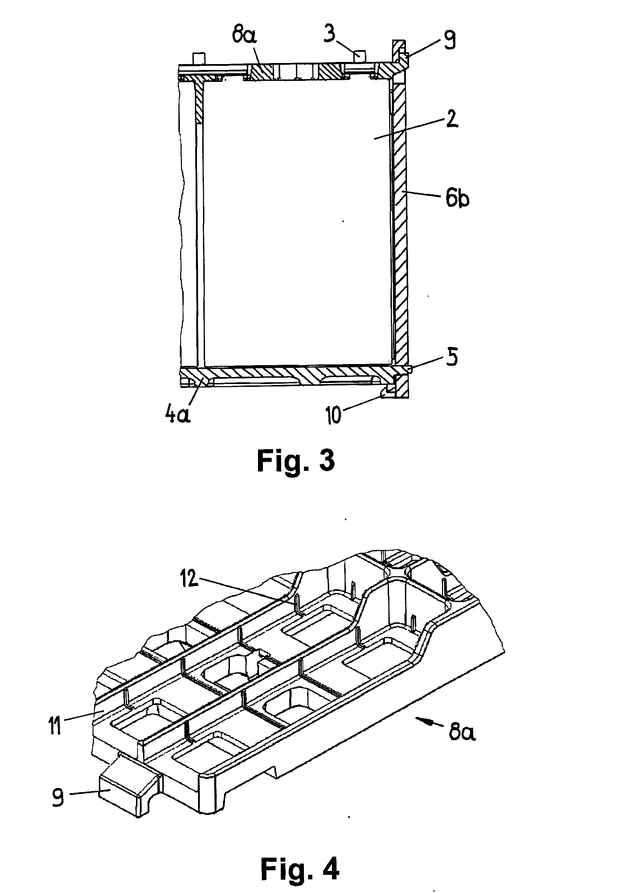

Fig. 1 zeigt ein erstes Beispiel eines erfindungsgemäßen Akkumulators 1a. Der Akkumulator 1a ist im Wesentlichen quaderförmig und umfasst mehrere spannungserzeugende Zellen 2 mit Zellverbindern 3. Ein erstes Gehäuseelement 4a, hier ein Bodenelement, begrenzt den Akkumulator 1a an einer ersten Seite. Das Bodenelement 4a umfasst mehrere Zapfen 5, welche in Aussparungen eines zweiten Gehäuseelements 6a und eines dritten Gehäuseelements 6b eingreifen. Die Gehäuseelemente 6a und 6b sind in diesem Beispiel als Seitenelemente ausgebildet. Das Seitenelement 6a umfasst zudem Befestigungsmittel zur Befestigung des Akkumulators 1a an einer Basisfläche in Form einer Befestigungslasche 7. An der Oberseite ist der Akkumulator 1a schließlich durch ein viertes Gehäuseelement 8a, hier einem Deckelelement, begrenzt. Das Deckelelement 8a umfasst Haken 9, welche in Aussparungen der Seitenelemente 6a und 6b eingreifen. An der Unterseite der Seitenelemente 6a und 6b befinden sich zudem Schnapphaken 10 (z.B. Fig. 3 dargestellt), mit deren Hilfe der Akkumulator 1a werkzeuglos zusammengebaut werden kann. Durch die Zapfen 5, die Haken 9 und die Schnapphaken 10 ergibt sich dennoch ein stabiler Verbund der Bauteile des Akkumulators 1a. In einer vorteilhaften Ausführungsvariante beinhaltet das Deckelelement 8a zudem eine Zellverbindungseinheit, mit deren Hilfe die Zellen 2 elektrisch zusammengeschaltet werden können. Beispielsweise können die Zellen 2 parallel, in Serie oder gemischt zusammengeschaltet werden.

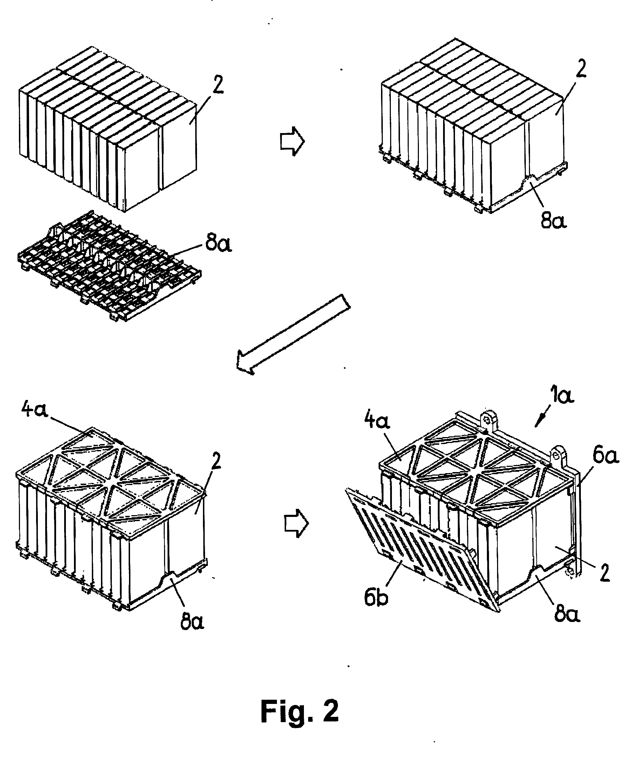

Fig. 2 zeigt nun den Ablauf bei der Montage des Akkumulators 1a beginnend mit der Darstellung links oben. In einem ersten Schritt werden die Zellen 2 kopfüber auf das Deckelement 8a aufgesetzt. Zur spielfreien Passung der Zellen 2 umfasst das Deckelelement 8a Erhebungen 12 auf den Stegen 11, welche die Zellen 2 voneinander trennen (in Fig. 4 dargestellt). Das rechte obere Bild zeigt nun den Zustand nach dem Aufsetzen der Zellen 2 auf das Deckelement 8a. In einem dritten Schritt, welcher links unten dargestellt ist, wird das Bodenelement 4a auf die Zellen 2 aufgesetzt. In einem vierten Schritt, welcher rechts unten dargestellt ist, werden schließlich die Seitenteile 6a und 6b in die Haken 9 des Deckelements 8a eingehakt und dann seitlich auf das Bodenelement 4a geklappt. Dabei greifen einerseits die Zapfen 5 in die Ausnehmungen der Seitenteile 6a und 6b, andererseits rasten die Schnapphaken 10 an Hinterschneidungen des Bodenelements 4a ein, sodass ein stabiler Verbund der Bauteile entsteht.

Das Bodenelement 4a und das Deckelelement 8a sind in diesem Beispiel vorteilhaft punktsymmetrisch, das heißt die beiden Elemente 4a und 8a können auch um 180° gedreht montiert werden, was die Montage des Akkumulators 1a vereinfacht. Dies ist aber keine zwingende Bedingung. Die genannten Elemente 4a und 8a können auch asymmetrisch sein. Desgleichen wäre auch denkbar, dass die Seitenelemente 6a und 6b punktsymmetrisch gestaltet sind, um die Montage des Akkumulators 1a noch weiter zu vereinfachen.

Fig. 3 zeigt den Akkumulator 1a im Schnitt, um zu verdeutlichen wie die Bauteile ineinander greifen. Besonders gut ist zu sehen, wie die Zapfen 5 und die Haken 9 in Ausnehmungen im Seitenteil 6b (analog dazu im Seitenteil 6a) eingreifen. Weiterhin ist auch gut zu erkennen wie die Schnapphaken 10 an der Hinterschneidung des Bodenelements 4a einrasten. Beim Anklappen der Seitenelemente 6a und 6b werden die Schnapphaken 10 durch die rampenförmige Ausgestaltung des Bodenelements 4a in diesem Bereich nach unten gedrückt und federn am Ende dieser Rampe nach oben zurück, wodurch die Seitenteile 6a und 6b stabil mit dem Bodenelement 4a verbunden werden.

Fig. 4 zeigt nun einen Ausschnitt des kopfüber dargestellten Deckelelements 8a. Gut zu sehen sind die einzelnen schalenförmigen Vertiefungen, welche für die Aufnahme je einer Zelle 2 vorbereitet sind und durch Stege 11 gebildet werden. Auf den Stegen 11 sind vorteilhaft Erhebungen 12 angeordnet, welche für einen sicheren Halt der Zellen 2 beziehungsweise einen Toleranzausgleich sorgen.

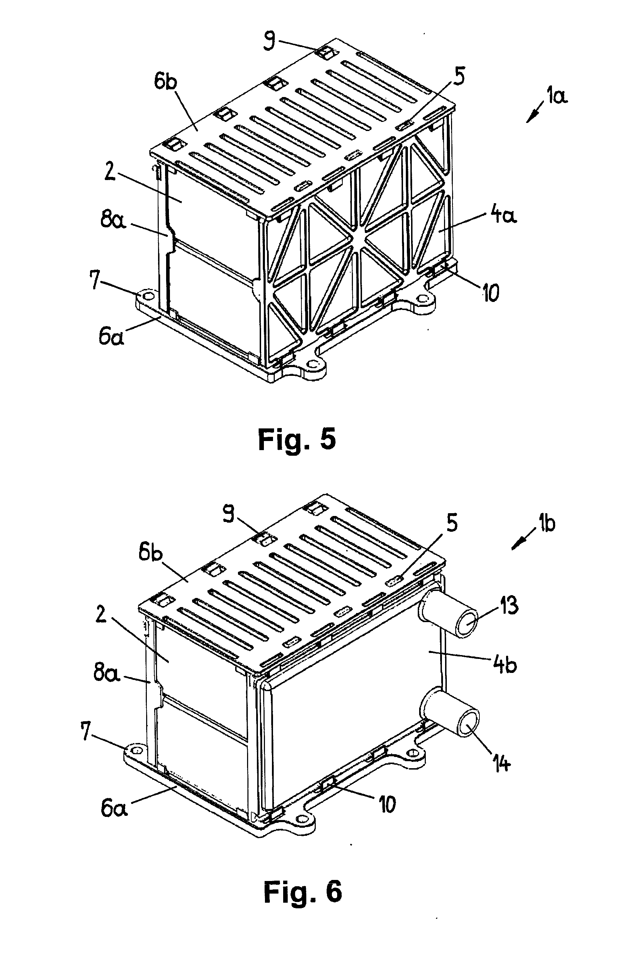

Die Fig. 5 zeigt den fertigen Akkumulator 1a nun schließlich schräg von unten. Gut zu sehen ist darin das Bodenelement 4a. Dieses ist in der Fig. 6 durch ein Alternativ-Gehäuseelement 4b, nämlich durch eine alternatives Bodenelement, ausgetauscht. Das Alternativ-Gehäuseelement 4b umfasst dieselben Verbindungsmittel, also Zapfen 5 sowie eine Hinterschneidung für den Schnapphaken 10, wie das Gehäuseelement 4a sodass das Alternativ-Gehäuseelement 4b direkt anstelle des Gehäuseelements 4a einsetzbar ist. Dies bedeutet, das neben dem Tausch des Gehäuseelements 4a gegen das Alternativ-Gehäuseelement 4b keine weiteren Umbauarbeiten am Akkumulator 1b nötig sind.

Auf diese Weise kann ein modulares System für einen im Wesentlichen quaderförmigen Akkumulator 1a, 1b realisiert werden, bei dem ein Alternativ-Gehäuseelement 4b, welche anstelle eines Gehäuseelements 4a, das eine erste Funktion erfüllt, direkt einsetzbar ist und eine zweite, zur ersten Funktion unterschiedliche Funktion erfüllt.

Konkret besteht das Alternativ-Gehäuseelement 4b aus einem Material mit einem integrierten Kanal, welcher für die Durchströmung durch ein Fluid vorbereitet ist. Dieser Kanal (oder auch mehrere Kanäle) ist mit einem Zulauf 13 und einem Ablauf 14 verbunden, mit deren Hilfe das Bodenelement 4b an ein Kühlsystem angeschlossen werden kann und mittels eines Fluids (flüssig oder gasförmig) temperiert (gekühlt oder beheizt) werden kann. Auf diese Weise können die Zellen 2 auf optimale Betriebstemperatur gebracht werden. Der Kanal im Inneren des Bodenelements 4b kann dabei in beliebiger Form verlegt sein, beispielsweise mäanderförmig, und beliebigen Querschnitt haben, zum Beispiel rechteckförmig oder kreisförmig.

Das Bodenelement 4a besteht dagegen aus Vollmaterial oder aus einem Material mit geschlossenen Hohlräumen (einem geschäumten Material). Das Bodenelement 4a erfüllt daher eine völlig andere Funktion als das Alternativ-Bodenelement 4b.

Aus den Figuren 1 bis 6 ist weiterhin erkennbar, dass die beiden Seitenteile 6a und 6b identische Befestigungsmittel, also Aussparungen für die Zapfen 5 und die Haken 9 sowie Schnapphaken 10 umfassen, jedoch unterschiedliche Funktionen erfüllen. Konkret umfasst das Seitenelement 6a Befestigungsmittel 7 (hier zur Befestigung eines Seitenelements parallel zu einer Basisfläche), wohingegen das Seitenelement 6b keine Befestigungsmittel aufweist. Das Seitenelement 6a kann somit als Alternativ-Seitenelement für das Seitenelement 6b aufgefasst werden und umgekehrt. Beispielsweise kann ein Akkumulator auch zwei Seitenelemente 6b umfassen. In diesem Fall sind zwei Gehäuseelemente 6b identisch.

Neben den dargestellten Seitenelementen 6a und 6b kann das modulare System noch weitere Seitenelemente umfassen. Beispielsweise können diese Montagemittel zur Befestigung eines Seitenelements normal zu einer Basisfläche oder auch Montagemittel zur Befestigung eines Seitenelements schräg zu einer Basisfläche umfassen.

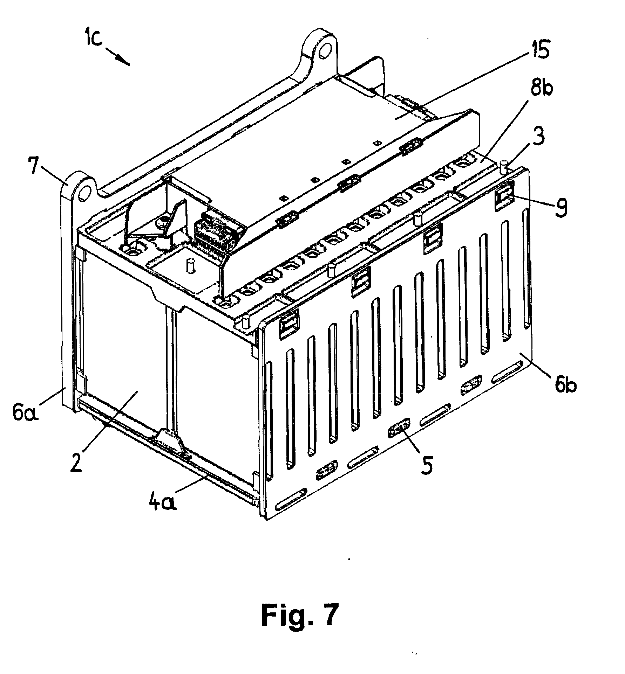

Fig. 7 zeigt nun eine weitere Variante der Erfindung in Form eines Akkumulators 1c, welcher dem in der Fig. 1 gezeigten Akkumulator 1a sehr ähnlich ist. Im Unterschied dazu umfasst dieser aber ein Deckelelement 8b mit einer alternativen Zellverbindungseinheit sowie eine Zellüberwachungseinheit 15 zur elektronischen Überwachung der spannungserzeugenden Zellen 2. Solcherart entstehen mehrere verschiedene Deckelelemente 8a und°8b, welche identische Befestigungsmittel zu den Seitenteilen 6a und 6b aufweisen, in diesem Beispiel konkret die Haken 9, jedoch unterschiedliche Funktionen erfüllen. Beispielsweise können die verschiedenen Deckelelemente 8a und 8b eines modularen Systems wie bereits erwähnt eine Serienschaltung der Zellen 2 bewirken, eine Parallelschaltung der Zellen 2 oder eine kombinierte Serien- und Parallelschaltung. Durch Wahl eines entsprechenden Deckelements 8a können die Zellen 2 nun auf einfache Weise zusammengeschaltet werden, um eine gewünschte Spannung oder eine gewünschte Kapazität des Akkumulators 1c zu erreichen.

Wie zuvor dargestellt wurde, umfasst das modulare System für den im Wesentlichen quaderförmigen Akkumulator 1a..1c somit mehrere lose Gehäuseelemente 4a, 4b, 6a, 6b, 8a, 8b, die bedarfsweise kombiniert werden können. Da die Begriffe "Gehäuseelement" und "Alternativ-Gehäuseelement" zwei Gehäuseelemente bezeichnen, die alternativ an derselben Position des Gehäuses eingesetzt werden können, können die genannten Begriffe auch austauschbar gebraucht werden.

In den gezeigten Beispielen ist ein Gehäuseelement 4a, 4b, 6a, 6b, 8a, 8b stets aus genau einem Seitenteil gebildet, das heißt ein Gehäuseelement 4a, 4b, 6a, 6b, 8a, 8b begrenzt stets je eine Seite des quaderförmigen Akkumulators 1a..1c. Zudem wird in den gezeigten Beispielen der Akkumulator 1a..1c im zusammengebauten Zustand durch die Gehäuseelemente 4a, 4b, 6a, 6b, 8a, 8b an genau vier Seiten begrenzt. Dadurch werden zwar vorteilhafte Ausgestaltungen der Erfindungen gebildet, die erwähnten Bedingungen sind aber nicht zwingend. Selbstverständlich können auch eine der beiden Stirnseiten oder beide Stirnseiten des Akkumulators 1a..1c durch ein Gehäuseelement begrenzt werden. Weiterhin kann ein Gehäuseelement 4a, 4b, 6a, 6b, 8a, 8b auch aus mehreren über ein Scharnier verbundenen Seitenteilen oder aus mehreren zueinander winkelig und miteinander fix verbundenen Seitenteilen gebildet sein. Beispielsweise könnten das Deckelement 8a und die beiden Seitenelemente 6a und 6b über Scharniere miteinander verbunden sein. Auch könnten die genannten Teile fix miteinander verbunden sein und ein U-förmiges Gehäuseelement bilden. Auf diese Weise kann die Anzahl der für die Montage des Akkumulators 1a..1c nötigen Arbeitsschritte reduziert werden.

In einer weiteren vorteilhaften Variante der Erfindung werden zumindest zwei der Bauteile des Akkumulators 1a..1c, insbesondere mehrere spannungserzeugende Zellen 2, miteinander verklebt. Auch das Verkleben der Gehäuseelement 4a, 4b, 6a, 6b, 8a, 8b untereinander oder mit den Zellen 2 ist natürlich möglich.

Ein besonders vorteilhaftes Verfahren zur Herstellung eines erfindungsgemäßen Akkumulators 1a..1c umfasst dabei die Schritte:
a) Applizieren von Klebstoff auf wenigstens einem der Bauteile 2..15 des Akkumulators 1a..1c,
b) Montage der genannten Bauteile 2..15,
c) Fixierung der Bauteile 2..15 durch Betätigung der Schnapphaken 10 und
d) Freistehende Lagerung des Akkumulators 1a..1c bis zur Aushärtung des Klebstoffs.

Auf diese Weise kann der Akkumulator 1a..1c einerseits werkzeuglos hergestellt werden, andererseits wird durch die Verklebung eine dauerhafte Verbindung der betreffenden Teile erzielt. Für die Aushärtung des Klebstoffs wird der Akkumulator 1a..1c vorteilhaft freistehend gelagert, das heißt eine Spannvorrichtung zum Aneinanderpressen der zu verklebenden Teile ist nicht notwendig. Generell können die Schnapphaken 10 von der hier dargestellten Form abweichen und entsprechend anderer an sich bekannter Clips-Verbindungen gestaltet sein. Beispielsweise können im Wesentlichen zylindrische Stifte verwendet werden, die beim Einstecken in ein Loch einrasten.

Der Akkumulator 1a..1c eignet sich insbesondere für den Einsatz in Kraftfahrzeugen. Besonders vorteilhaft ist dabei, dass der Akkumulator 1a..1c aufgrund der erfindungsgemäßen Maßnahmen sehr leicht an die verschiedenen Anforderungen unterschiedlicher Fahrzeuge angepasst werden kann. Selbstverständlich kann der Akkumulator 1a..1c aber auch abseits der Kraftfahrzeugtechnik eingesetzt werden.

Abschließend wird festgehalten, dass die Bestandteile der Figuren ggf. nicht maßstabsgetreu dargestellt sind und dass die einzelnen in den Figuren dargestellten Varianten auch den Gegenstand einer unabhängigen Erfindung bilden können. Lageangaben wie "rechts", "links", "oben", "unten" und dergleichen beziehen sich auf die dargestellte Lage des jeweiligen Bauteils und sind bei Änderung der genannten Lage gedanklich entsprechend anzupassen.

## Patentansprüche

1. Akkumulator (1a..1c) mit im Wesentlichen quaderförmiger Form, umfassend:
- zumindest eine spannungserzeugende Zelle (2) und
- zumindest zwei separate Gehäuseelemente (4a, 4b, 6a, 6b, 8a, 8b), welche jeweils maximal drei Seitenteile und gemeinsam zumindest vier Seitenteile umfassen, wobei ein Seitenteil zur Begrenzung je einer Seite des quaderförmigen Akkumulators (1a..1c) vorgesehen ist,
**dadurch gekennzeichnet, dass**
die zumindest zwei Gehäuseelemente (4a, 4b, 6a, 6b, 8a, 8b) über Schnapphaken (10) miteinander verbunden sind.

2. Akkumulator (1a..1c) nach Anspruch 1, **dadurch gekennzeichnet, dass** ein Gehäuseelement (4a, 4b, 6a, 6b, 8a, 8b) einen Kanal umfasst, welche für die Durchströmung durch ein Fluid vorbereitet ist.

3. Akkumulator (1a..1c) nach Anspruch 1 oder 2, **dadurch gekennzeichnet, dass** ein Gehäuseelement (4a, 4b, 6a, 6b, 8a, 8b) eine Zellverbindungseinheit zur elektrischen Verbindung von zumindest zwei spannungserzeugenden Zellen (2) umfasst.

4. Akkumulator (1a..1c) nach einem der Ansprüche 1 bis 3, **dadurch gekennzeichnet, dass** ein Gehäuseelement (4a, 4b, 6a, 6b, 8a, 8b) eine Zellüberwachungseinheit (15) zur Überwachung von zumindest zwei spannungserzeugenden Zellen (2) umfasst.

5. Akkumulator (1a..1c) nach einem der Ansprüche 1 bis 4, **dadurch gekennzeichnet, dass** ein Gehäuseelement (4a, 4b, 6a, 6b, 8a, 8b) Montagemittel (7) zur Befestigung eines Seitenelements auf einer Basisfläche umfasst.

6. Akkumulator (1a..1c) nach einem der Ansprüche 1 bis 5, **dadurch gekennzeichnet, dass** ein Gehäuseelement (4a, 4b, 6a, 6b, 8a, 8b) aus genau einem Seitenteil gebildet ist.

7. Akkumulator (1a..1c) nach einem der Ansprüche 1 bis 5, **dadurch gekennzeichnet, dass** ein Gehäuseelement (4a, 4b, 6a, 6b, 8a, 8b) aus wenigstens zwei über ein Scharnier verbundenen Seitenteilen gebildet ist.

8. Akkumulator (1a..1c) nach einem der Ansprüche 1 bis 5, **dadurch gekennzeichnet, dass** ein Gehäuseelement (4a, 4b, 6a, 6b, 8a, 8b) aus wenigstens zwei winkelig und miteinander fix verbundenen Seitenteilen gebildet ist.

9. Akkumulator (1a..1c) nach einem der Ansprüche 1 bis 8, **dadurch gekennzeichnet, dass** die Gehäuseelemente (4a, 4b, 6a, 6b, 8a, 8b) dazu vorbereitet sind, den Akkumulator (1a..1c) an genau vier Seiten zu begrenzen.

10. Akkumulator (1a..1c) nach einem der Ansprüche 1 bis 9, **dadurch gekennzeichnet, dass** zumindest zwei Gehäuseelemente (4a, 4b, 6a, 6b, 8a, 8b) identisch sind.

11. Akkumulator (1a..1c) nach einem der Ansprüche 1 bis 10, **dadurch gekennzeichnet, dass** ein Gehäuseelement (4a, 4b, 6a, 6b, 8a, 8b) punktsymmetrisch ist.

12. Akkumulator (1a..1c) nach Anspruch 11, **dadurch gekennzeichnet, dass** zumindest zwei der Bauteile (2..15) miteinander verklebt sind.

13. Verfahren zur Herstellung eines Akkumulators (1a..1c) nach Anspruch 12, **gekennzeichnet durch** die Schritte:
a) Applizieren von Klebstoff auf wenigstens einem der Bauteile (2..15) des Akkumulators (1a..1c),
b) Montage der genannten Bauteile (2..15),
c) Fixierung der Bauteile (2..15) **durch** Betätigung der Schnapphaken (10) und
d) Freistehende Lagerung des Akkumulators (1a..1c) bis zur Aushärtung des Klebstoffs.
